# EUROPÄISCHE PATENTSCHRIFT

(11) **EP 3 771 617 B1**
(45) Veröffentlichungstag und Bekanntmachung des Hinweises auf die Patenterteilung: **08.03.2023**
(21) Anmeldenummer: 20184408.1
(22) Anmeldetag: 07.07.2020
(51) Int. Cl.: B62B 5/06

(54) **DEICHSEL FÜR EIN FLURFÖRDERZEUG**
DRAWBAR FOR AN INDUSTRIAL TRUCK
TIMON POUR UN CHARIOT DE MANUTENTION

(30) Priorität: 29.07.2019 DE 102019120374
(43) Veröffentlichungstag der Anmeldung: 03.02.2021
(73) Patentinhaber: Linde Material Handling GmbH, 63743 Aschaffenburg (DE)
(72) Erfinder: PROUST, Freddy, 86230 Serigny (FR)
(74) Vertreter: Patentship Patentanwaltgesellschaft

(56) Entgegenhaltungen:
- DE-A1- 1 554 454
- DE-A1-102004 013 916
- US-A1- 2005 028 637
- US-A1- 2008 141 459

## Beschreibung

Die Erfindung betrifft eine Deichsel für ein Flurförderzeug mit einem Deichselschaft, der an einem ersten Ende mit einer Gelenkverbindung an dem Flurförderzeug anbaubar ist und an einem zweiten Ende mit einem Deichselkopf verbunden ist, wobei der Deichselschaft der Deichsel aus einer metallischen Tragstruktur, die an einem ersten Ende mit einem Gelenkflansch der Gelenkverbindung versehen ist und an einem zweiten Ende mit einem Befestigungsflansch zur Befestigung des Deichselkopfes versehen ist, gebildet ist.

An Deichseln von Flurförderzeugen wird als Anforderung gestellt, dass der Deichselschaft hinsichtlich der mechanischen Eigenschaften stabil und robust ist, da Teile einer mit dem Flurförderzeug aufgenommenen Last auf die Deichsel und den Deichselschaft fallen können. Als weitere Anforderung wird an Deichseln von Flurförderzeugen gestellt, dass der Deichselschaft hinsichtlich der optischen Eigenschaften eine ästhetische Form und Anmutung aufweist, da der Deichselschaft an dem Flurförderzeug ein sichtbares Bauteil bildet und im Betrieb des Flurförderzeugs ständig in Nutzung ist.

Es ist bekannt, bei Deichseln von Flurförderzeugen den Deichselschaft als Metallkonstruktion, insbesondere geschweißte Metallkonstruktion, oder als Plastikkonstruktion auszubilden. Die Metallkonstruktion oder die Plastikkonstruktion müssen hierbei sowohl die mechanischen Eigenschaften als auch die optischen Eigenschaften erfüllen.

Ein vollständig als Metallkonstruktion ausgebildeter Deichselschaft kann hinsichtlich der mechanischen Eigenschaften stabil und robust sowie hinsichtlich der optischen Eigenschaften mit einer ästhetischen Form und Anmutung versehen werden, allerdings verursacht ein vollständig als Metallkonstruktion ausgebildeter Deichselschaft bei einer komplexen äußeren Form des Deichselschaftes einen hohen Bauaufwand und somit hohe Herstellkosten, da eine komplexe äußere Form des Deichselschaftes an einer Metallkonstruktion nur mit hohem Kostenaufwand umsetzbar ist.

Bei einem vollständig als Plastikkonstruktion ausgebildeten Deichselschaft kann hinsichtlich der optischen Eigenschaften eine komplexe äußere Form des Deichselschaftes einfacher umgesetzt werden, allerdings weist ein als Plastikkonstruktion ausgebildeter Deichselschaft gegenüber einem als Metallkonstruktion ausgebildeten Deichselschaft bei den mechanischen Eigenschaften Nachteile auf, da eine Plastikkonstruktion eine geringere Festigkeit und eine geringere Schlagzähigkeit als eine Metallkonstruktion aufweist.

Bei Deichseln von Flurförderzeugen, bei denen der Deichselschaft als Metallkonstruktion, insbesondere geschweißte Metallkonstruktion, oder als Plastikkonstruktion ausgebildet ist, ist weiter nachteilig, dass für unterschiedliche Versionen von Deichseln, die sich hinsichtlich der optischen Eigenschaften des Deichselschaftes unterscheiden, jeweils unterschiedliche Metallkonstruktionen oder unterschiedliche Plastikkonstruktionen erforderlich sind, die jeweils sowohl die mechanischen Eigenschaften als auch die optischen Eigenschaften erfüllen müssen. Unterschiedliche Versionen von Deichseln, die sich hinsichtlich der optischen Eigenschaften des Deichselschaftes unterscheiden, erfordern somit jeweils speziell angepasste und speziell entwickelte Metallkonstruktionen oder Plastikkonstruktionen, die zu einem hohen Entwicklungsaufwand verschiedener Versionen von Deichseln führen.

Die DE 10 2004 013 916 A1 offenbart eine gattungsgemäße Deichsel für ein Flurförderzeug mit den Merkmalen des Oberbegriffs des Patentanspruchs 1.

Die US 2008/141459 A1 offenbart ein fahrbares Krankenbett mit Bedienhebeln, die ein gebogenes Rohr aufweisen, das im unteren Bereich mit Sensoren in Wirkverbindung steht, mit denen an den Bedienhebeln aufgebrachte Zug- und Druckkräfte zur Steuerung des Fahrantriebs des Krankenbetts erfasst werden können. Die Bedienhebel sind im unteren Bereich weiterhin um einen Bolzen zwischen einer nach unten eingeklappten Aufbewahrungsposition und einer nach oben ausgeklappten Bedienposition klappbar. Ein Faltenbalg ist am unteren Bereich des Bedienhebels angeordnet, der die Sensoren und den Bereich um den Bolzen abdeckt.

Die DE 15 54 454 A1 offenbart eine Verkleidung von Metall-Rohr-Profilen an Stahlmöbeln, Kinderwagen, Puppenwagen, um Griffe oder Armauflagen zu bilden. Die Verkleidung ist von einem elastischen Hohlprofil aus Kunststoff gebildet, das auf das zu verkleidende Profil aufgesetzt und angedrückt wird und dann das zu verkleidende Profil selbstklemmend umfasst. Das Hohlprofil ist mit einem Längsschlitz versehen, so dass die seitlichen Flanken aufgebogen werden können, um das Hohlprofil auf das Profil aufsetzen zu können. Um das Hohlprofil an dem Profil gegen Gleiten oder Verdrehen zu sichern, können Zapfen an dem Hohlprofil vorgesehen sein, die in Bohrungen des Profils eingreifen.

Der vorliegenden Erfindung liegt die Aufgabe zugrunde, eine Deichsel zur Verfügung zu stellen, die hinsichtlich der genannten Nachteile verbessert ist.

Diese Aufgabe wird erfindungsgemäß dadurch gelöst, dass der Deichselschaft der Deichsel weiterhin aus einem die metallische Tragstruktur verkleidenden Verkleidungsbauteil gebildet ist, wobei zwischen dem Gelenkflansch und dem Verkleidungsbauteil ein axialer Anschlag ausgebildet ist und wobei zwischen dem mit dem Befestigungsflansch verbundenen Deichselkopf und dem Verkleidungsbauteil ein weiterer axialer Anschlag ausgebildet ist. Bei der erfindungsgemäßen Deichsel ist somit der Deichselschaft aus zwei Bauteilen zusammengesetzt, nämlich der metallischen Tragstruktur und dem die metallische Tragstruktur verkleidenden Verkleidungsbauteil. Bei der erfindungsgemäßen Deichsel erfolgt somit eine Funktionstrennung dahingehend, dass die metallische Tragstruktur nur die mechanischen Eigenschaften des Deichselschaftes erfüllen muss und das Verkleidungsbauteil nur die optischen Eigenschaften des Deichselschaftes erfüllen muss. Mit der metallischen Tragstruktur können hierbei mit geringem Bauaufwand eine hohe Festigkeit und eine hohe Robustheit des Deichselschaftes erzielt werden. Das Verkleidungsbauteil ermöglicht es bei geringem Bauaufwand, bei den optischen Eigenschaften eine ästhetische Form und Anmutung sowie eine komplexe Form des Deichselschaftes umzusetzen. Ein weiterer Vorteil der erfindungsgemäßen Deichsel besteht darin, dass der Deichselschaft einen modularen Aufbau aufweist und hierdurch ermöglicht wird, dass unterschiedliche Versionen von Deichseln, die sich hinsichtlich der optischen Eigenschaften des Deichselschaftes unterscheiden, mit einer gleichen metallischen Tragstruktur und entsprechend angepassten und unterschiedlichen Verkleidungsbauteilen hergestellt werden können. Unterschiedliche Versionen von Deichseln, die sich hinsichtlich der optischen Eigenschaften des Deichselschaftes unterscheiden, benötigen daher einen deutlich verringerten Entwicklungsaufwand.

Erfindungsgemäß ist zwischen dem Gelenkflansch und dem Verkleidungsbauteil ein axialer Anschlag ausgebildet. Hierdurch kann das auf die metallische Tragstruktur aufgeschobene Verkleidungsbauteil auf einfache Weise im Bereich des Gelenkflansches in axialer Richtung gesichert werden. Der axiale Anschlag kann weiterhin im Sinne einer Zentrierung das auf die metallische Tragstruktur aufgeschobene Verkleidungsbauteil in einer oder beiden seitlichen Richtungen sichern.

Erfindungsgemäß ist weiterhin zwischen dem mit dem Befestigungsflansch verbundenen Deichselkopf und dem Verkleidungsbauteil ein weiterer axialer Anschlag ausgebildet. Hierdurch kann das auf die metallische Tragstruktur aufgeschobene Verkleidungsbauteil auf einfache Weise im Bereich des Deichselkopfes in axialer Richtung gesichert werden. Der axiale Anschlag kann weiterhin im Sinne einer Zentrierung das auf die metallische Tragstruktur aufgeschobene Verkleidungsbauteil in einer oder beiden seitlichen Richtungen sichern.

Gemäß einer vorteilhaften Ausgestaltungsform der Erfindung ist das Verkleidungsbauteil als rohrförmige Hülse ausgebildet, die auf die metallische Tragstruktur aufschiebbar ist. Das Verkleidungsbauteil stellt somit eine einteilige, umfangsseitig geschlossene Hülse dar, die beispielsweise durch ein Extrusionsverfahren auf einfache Weise hergestellt werden kann.

Bevorzugt besteht das Verkleidungsbauteil aus Kunststoff. Ein aus Kunststoff bestehendes Verkleidungsbauteil kann auf einfache Weise auch mit einer komplexen Form hergestellt werden und ermöglicht es, die Anforderungen an den Deichselschaft hinsichtlich der optischen Eigenschaften mit einer ästhetischen Form und Anmutung auf einfache Weise umzusetzen.

Die metallische Tragstruktur weist gemäß einer vorteilhaften Ausführungsform der Erfindung ein Metallrohr auf, an dem an dem ersten Ende der Gelenkflansch und an dem zweiten Ende der Befestigungsflansch befestigt ist. Mit einem Metallrohr, das an den beiden gegenüberliegenden Enden mit dem Gelenkflansch und dem Befestigungsflansch versehen ist, können die Anforderungen an den Deichselschaft hinsichtlich der mechanischen Eigenschaften mit einer hohen Festigkeit und Robustheit bei geringem Bauaufwand umgesetzt werden.

Gemäß einer vorteilhaften Ausführungsform der Erfindung ist der Gelenkflansch als Gelenkgabel ausgebildet und/oder der Befestigungsflansch als Flanschplatte ausgebildet. Mit einem als Gelenkgabel ausgebildeten Gelenkflansch kann der Deichselschaft auf einfache Weise an dem Flurförderzeug um eine horizontale Schwenkachse schwenkbar angelenkt werden. Eine als Flanschplatte ausgebildeter Befestigungsflansch ermöglicht es auf einfache Weise, an dem Deichselschaft den Deichselkopf anzubauen.

Gemäß einer vorteilhaften Ausführungsform der Erfindung ist der Innenquerschnitt des Verkleidungsbauteils größer als die Außenumfangsabmessungen des Befestigungsflansches, so dass das Verkleidungsbauteil in Längsrichtung der metallischen Tragstruktur über den Befestigungsflansch auf die Tragstruktur aufschiebbar ist. Hierdurch wird eine einfache und schnelle Montage eines als Hülse ausgebildeten Verkleidungsbauteils auf der metallischen Tragstruktur ermöglicht. Weiterhin kann hierdurch im Bereich des Befestigungsflansches auf einfache Weise eine Zentrierung des auf die metallische Tragstruktur aufgeschobenen Verkleidungsbauteils in einer oder beiden seitlichen Richtungen erzielt werden.

Gemäß einer vorteilhaften Weiterbildung der Erfindung liegt das Verkleidungsbauteil mit der Innenfläche zumindest teilweise an der Außenfläche des Metallrohrs an. Hierdurch kann auf einfache Weise eine Zentrierung des auf die metallische Tragstruktur aufgeschobenen Verkleidungsbauteils in einer oder beiden seitlichen Richtungen erzielt werden und ein Klappern des Verkleidungsbauteils verhindert werden.

Die Erfindung betrifft weiterhin ein Verfahren zur Herstellung einer erfindungsgemäßen Deichsel mit den folgenden Schritten:
- Herstellung einer metallischen Tragstruktur;
- Bereitstellen eines Verkleidungsbauteils;
- Aufschieben des Verkleidungsbauteils auf die Tragstruktur;
- Befestigung eines Deichselkopfes an der Tragstruktur.

Durch Aufschieben des Vekleidungsbauteils auf die Tragstruktur in Längsrichtung der Tragstruktur und anschließende Befestigung des Deichselkopfes an dem Befestigungsflansch der Tragstruktur kann die Deichsel auf einfache und schnelle Weise zusammenmontiert und das Verkleidungsbauteil an der Tragstruktur in axialer Richtung gesichert werden.

Die Erfindung betrifft weiterhin ein Baukastensystem für zumindest zwei unterschiedliche Deichseln bei dem die metallische Tragstruktur als Gleichteil ausgebildet ist und das Baukastensystem zumindest zwei unterschiedliche Verkleidungsbauteile umfasst, die sich hinsichtlich der optischen Eigenschaften, insbesondere hinsichtlich der Form und/oder Farbe, unterscheiden. Durch den erfindungsgemäßen modularen Aufbau des Deichselschaftes wird es mit einem derartigen Baukastensystem auf einfache Weise ermöglicht, unterschiedliche Versionen von Deichseln, die sich hinsichtlich der optischen Eigenschaften des Deichselschaftes unterscheiden, mit einer als Gleichteil ausgeführten metallischen Tragstruktur und entsprechend hinsichtlich der optischen Eigenschaften angepassten und unterschiedlichen Verkleidungsbauteilen herzustellen.

Das Baukastensystem umfasst gemäß einer Weiterbildung der Erfindung zumindest zwei unterschiedliche Deichselköpfe. Hierdurch kann die Variantenanzahl an Deichseln weiter erhöht werden, da an die als Gleichteil ausgeführte metallische Tragstruktur auf einfache Weise unterschiedliche Varianten der Deichselköpfe angebaut werden können.

Weitere Vorteile und Einzelheiten der Erfindung werden anhand des in den schematischen Figuren dargestellten Ausführungsbeispiels näher erläutert. Hierbei zeigt
- Figur 1: ein Flurförderzeug mit einer erfindungsgemäßen Deichsel in einer perspektivischen Ansicht,
- Figur 2: die metallische Tragstruktur der erfindungsgemäßen Deichsel in einer Seitenansicht und einer Draufsicht,
- Figur 3: die erfindungsgemäße Deichsel in einer Explosionsdarstellung in einer Seitenansicht und einer Draufsicht mit einer Verdeutlichung der Montage,
- Figur 4: die montierte Deichsel in einer Seitenansicht und einer Draufsicht und
- Figur 5: einen Schnitt entlang der Linie Z-Z der Figur 4.

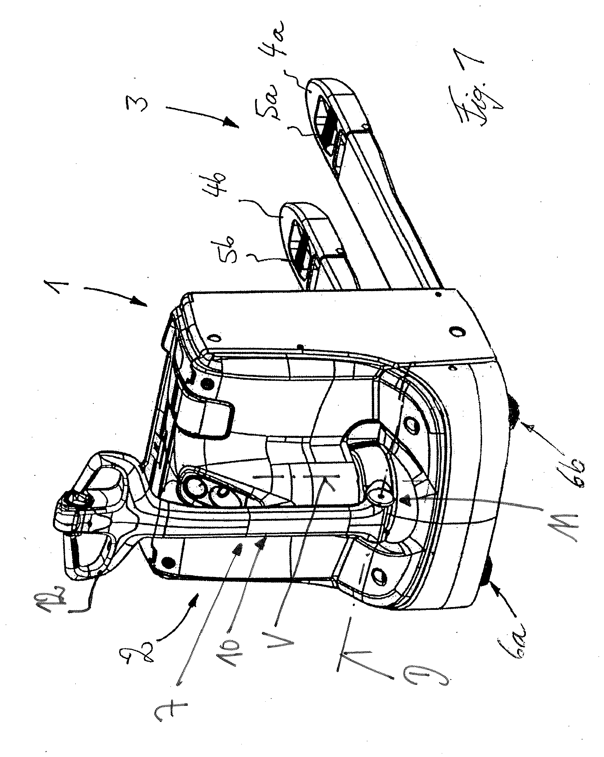

In Figur 1 ist ein deichselgeführtes Flurförderzeug 1 in einer perspektivischen Ansicht dargestellt. Das Flurförderzeug 1 ist im dargestellten Ausführungsbeispiel, als Hubwagen ausgebildet.

Das Flurförderzeug 1 weist einen Antriebsteil 2 und einen relativ zu dem Antriebsteil 2 anhebbaren und absenkbaren Lastteil 3 auf. Der Lastteil 3 weist zwei seitlich beabstandete Lastarme 4a, 4b auf, die sich mit jeweils mindestens einer Lastrolle 5a, 5b auf einer Fahrbahn abstützen.

In dem Antriebsteil 2 befinden sich die für den Antrieb des Flurförderzeugs 1 erforderlichen Aggregate, beispielsweise ein elektrischer Fahrantriebsmotor und ein elektrischer Pumpenmotor, der eine Hydraulikpumpe zur Versorgung einer hydraulischen Hubvorrichtung zum Anheben und Absenken des Lastteils 3 antreibt.

Der an dem Antriebsteil 2 anhebbar und absenkbar angeordnete Lastteil 3 umfasst ein Batteriefach für eine Traktionsbatterie, die das elektrische Antriebssystem des Flurförderzeugs 1 mit elektrischer Energie versorgt.

Im Bereich des Antriebsteils 2 steht das Flurförderzeug 1 mit einem lenkbaren, in der dargestellten Ansicht nicht ersichtlichen Antriebsrad auf der Fahrbahn auf. Zusätzlich kann mindestens eine von dem Antriebsrad in Querrichtung des Flurförderzeugs 1 seitlich beabstandete Stützrolle 6a, 6b vorgesehen sein, mit der das Flurförderzeug 1 auf der Fahrbahn aufsteht.

Zur Bedienung des Flurförderzeugs 1 durch eine Bedienperson ist eine Deichsel 7 vorgesehen, die um eine horizontale Schwenkachse D schwenkbar an dem Antriebsteil 2 angeordnet ist. Die Deichsel 7 ist weiterhin um eine vertikale Schwenkachse V schwenkbar an dem Antriebsteil 2 angeordnet, um eine Lenkung des Antriebsrads vorzugeben.

Die Deichsel 7 besteht aus einem Deichselschaft 10, der an einem ersten, unteren Ende mittels einer Gelenkverbindung 11 an dem Flurförderzeug 1 um die Schwenkachse D schwenkbar angebaut ist und der an einem zweiten, oberen Ende mit einem Deichselkopf 12 verbunden ist. An dem Deichselkopf 12 sind von der Bedienperson bedienbare Steuerelemente angeordnet, beispielsweise mindestens ein Fahrschalter zur Steuerung des Fahrantriebsmotors und Schalter zur Betätigung der Hubvorrichtung des Lastteils 3.

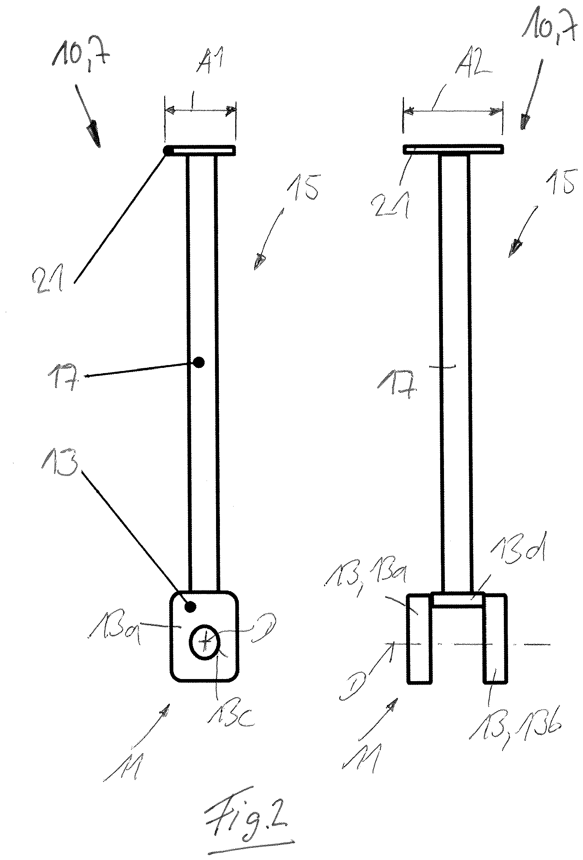

Wie aus den Figuren 2 bis 5 ersichtlich ist, ist der Deichselschaft 10 der Deichsel 7 erfindungsgemäß aus einer metallischen Tragstruktur 15 und einem die metallische Tragstruktur 15 verkleidenden Verkleidungsbauteil 16 gebildet. Der erfindungsgemäße Deichselschaft 10 ist somit aus den beiden Bauteilen metallische Tragstruktur 15 und Verkleidungsbauteil 16 gebildet und zusammengesetzt. In den Figuren 2 bis 4 ist hierbei jeweils in der linken Darstellung eine Seitenansicht und in der rechten Darstellung eine Draufsicht dargestellt.

Die metallische Tragstruktur 15 ist - wie in der Figur 2 näher dargestellt ist - an einem ersten, unteren Ende mit einem Gelenkflansch 13 der Gelenkverbindung 11 versehen und an einem zweiten, oberen Ende mit einem Befestigungsflansch 21 versehen, an dem der Deichselkopf 12 befestigt werden kann.

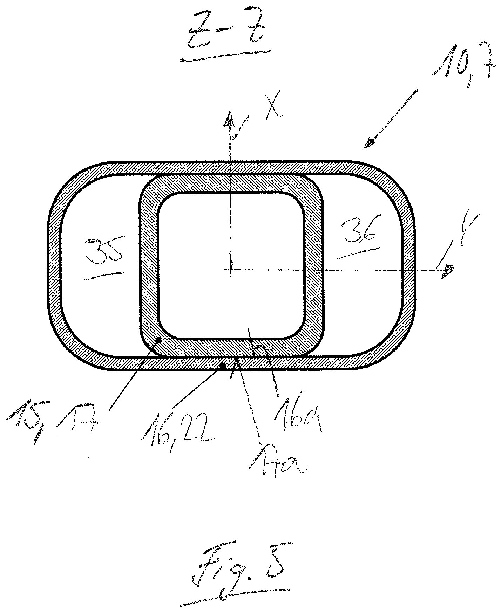

Die metallische Tragstruktur 15 weist als tragendes Element ein Metallrohr 17 auf, an dem an dem ersten Ende der Gelenkflansch 13 und an dem zweiten Ende der Befestigungsflansch 21 befestigt ist. Bevorzugt sind der Gelenkflansch 13 und der Befestigungsflansch 21 mit dem Metallrohr 17 durch Schweißen verbunden. Wie aus Figur 5 näher ersichtlich ist, weist das Metallrohr 17 im dargestellten Ausführungsbeispiel einen quadratischen oder rechteckigen Querschnitt auf.

Im dargestellten Ausführungsbeispiel ist der Gelenkflansch 13 als Gelenkgabel ausgebildet, der zwei seitlich beabstandete Lagerflansche 13a, 13b aufweist, in denen jeweils eine Aufnahmebohrung 13c für einen Bolzen der Gelenkverbindung 11 ausgebildet ist. Die Gelenkgabel weist weiterhin eine die beiden Lagerflansche 13a, 13b verbindende Verbindungsplatte 13d auf, die mit dem Metallrohr 17 verbunden ist und an dem Metallrohr 17 befestigt ist.

Im dargestellten Ausführungsbeispiel ist der Befestigungsflansch 21 als Flanschplatte ausgebildet, die mit dem Metallrohr 17 verbunden ist und an dem Metallrohr 17 befestigt ist. Die Flanschplatte kann zur Befestigung des Deichselkopfes 12 mit nicht näher dargestellten Aufnahmebohrungen für Befestigungsschrauben versehen sein.

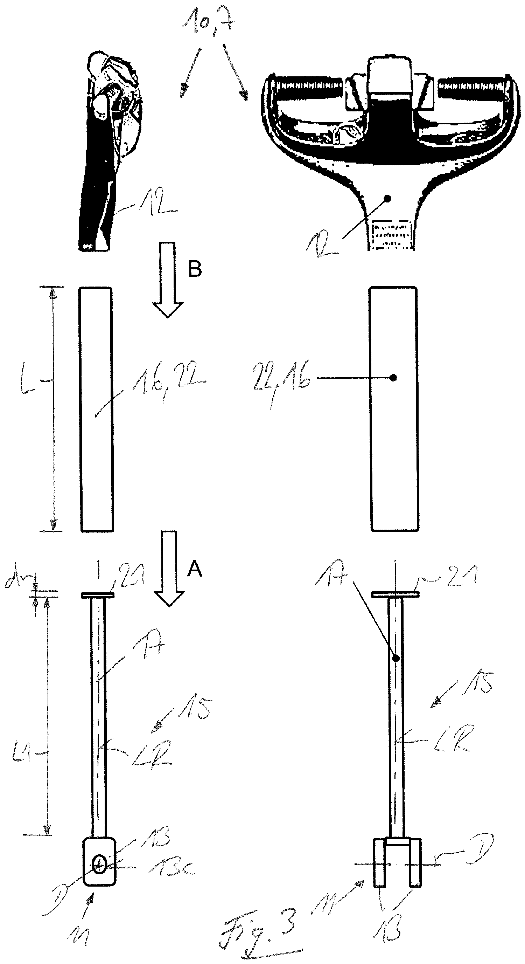

Das Verkleidungsbauteil 16 ist im dargestellten Ausführungsbeispiel - wie aus der Figur 3 näher ersichtlich ist - als rohrförmige Hülse 22 ausgebildet, die zur Verkleidung der metallischen Tragstruktur 15 auf die metallische Tragstruktur 15 aufschiebbar ist.

Wie aus der Figur 5 ersichtlich ist, ist die Hülse 22 als einteilige, umfangsseitig geschlossene rohrartige Hülse 22 ausgebildet, die im dargestellten Ausführungsbeispiel einen quadratischen oder rechteckigen Querschnitt aufweist.

Das Verkleidungsbauteil 16 besteht bevorzugt aus Kunststoff. Das Verkleidungsbauteil 16 ist bevorzugt durch ein Extrusionsverfahren hergestellt.

Der Innenquerschnitt des Verkleidungsbauteils 16 ist größer als die Außenumfangsabmessungen A1, A2 des Befestigungsflansches 21, so dass das Verkleidungsbauteil 16 in Längsrichtung LR, d.h. in Richtung der Längsachse, der metallischen Tragstruktur 15 über den Befestigungsflansch 21 auf die Tragstruktur 15 aufgeschoben werden kann. Dieses Aufschieben des Verkleidungsbauteils 17 auf die Tragstruktur 15 ist in der Figur 3 mit dem Pfeil A verdeutlicht.

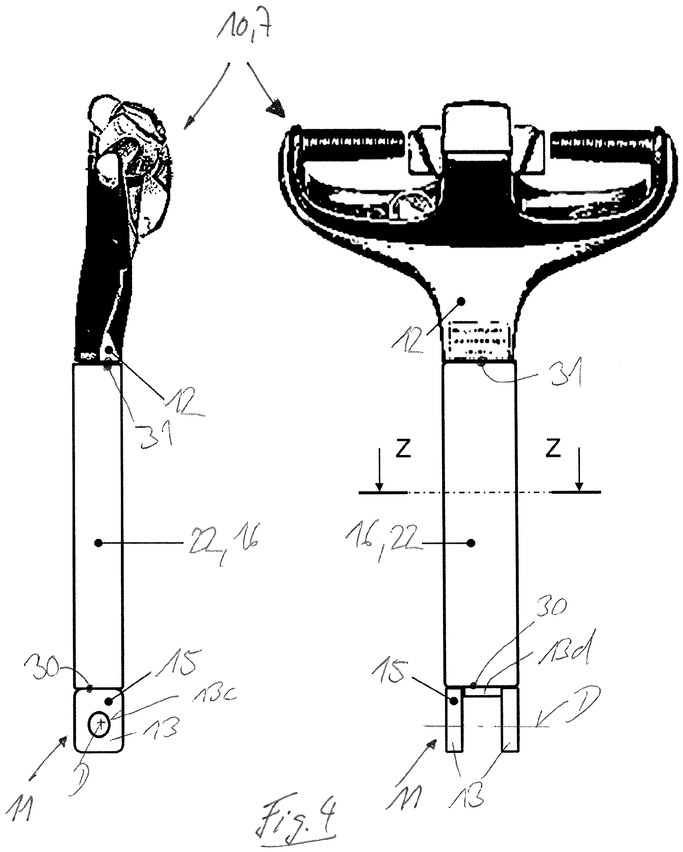

Zwischen dem Gelenkflansch 13 und der unteren Stirnfläche des Verkleidungsbauteils 16 ist hierbei ein axialer Anschlag 30 ausgebildet, der in der Figur 4 dargestellt ist. Das untere Ende des auf die Tragstruktur 15 aufgeschobene Verkleidungsbauteils 16 wird somit mittels des Anschlags 30 an dem Gelenkflansch 13 der Tragstruktur 15 in axialer Richtung gesichert.

Anschließend kann der Deichselkopf 12 aufgesetzt und an dem Befestigungsflansch 21 befestigt werden. Dies ist in der Figur 3 mit dem Pfeil B verdeutlicht. Zwischen dem an dem Befestigungsflansch 21 befestigten Deichselkopf 12 und der oberen Stirnfläche des Verkleidungsbauteils 16 ist hierbei ein weiterer axialer Anschlag 31 ausgebildet, der in der Figur 4 dargestellt ist. Das obere Ende des auf die Tragstruktur 15 aufgeschobene Verkleidungsbauteils 16 wird somit mittels des Anschlags 31 an dem an dem Befestigungsflansch 21 befestigten Deichselkopf 1 in axialer Richtung gesichert.

Die Länge L des Verkleidungsbauteils 16 entspricht bevorzugt der Summe aus der Länge L1 des Metallrohrs 17 und der Dicke d des Befestigungsflansches 21, so dass im montierten Zustand das Verkleidungsbauteil 16 das Metallrohr 17 und den Befestigungsflansch 21 der Tragstruktur 15 vollständig verkleidet.

Wie aus der Figur 5 ersichtlich ist, sind das Metallrohr 17 und das Verkleidungsbauteil 16 derart ausgeführt, dass das Verkleidungsbauteil 16 mit der Innenfläche 16a zumindest teilweise an der Außenfläche 17a des Metallrohrs 17 anliegt. Dies ermöglicht eine Sicherung des auf das Metallrohr 17 aufgeschobenen Verkleidungsbauteils 16 in seitlicher Richtung X und/oder in seitlicher Richtung Y. Alternativ oder zusätzlich können der Anschlag 30 und/oder der Anschlag 31 eine Zentrierung des auf die metallische Tragstruktur 15 aufgeschobenen Verkleidungsbauteils 16 in einer oder beiden seitlichen Richtungen X, Y ermöglichen.

Aus der Figur 5 ist weiterhin ersichtlich, dass das als Hülse 22 ausgebildete Verkleidungsbauteil 16 das Metallrohr 17 an allen vier Umfangsseiten umschließt und somit das Metallrohr 17 vollständig verkleidet.

Bei der Herstellung der erfindungsgemäßen Deichsel 7 wird die metallische Tragstruktur 15 gemäß der Figur 2 hergestellt und ein entsprechendes Verkleidungsbauteil 16 bereitgestellt. Für die Montage der erfindungsgemäßen Deichsel 7 wird dann - wie in der Figur 3 mit dem Pfeil A verdeutlicht ist - in einem ersten Schritt das Verkleidungsbauteil 16 über den Befestigungsflansch 21 auf die Tragstruktur 15 in deren Längsrichtung LR aufgeschoben, bis das Verkleidungsbauteil 16 an dem Gelenkflansch 13 ansteht und der Gelenkflansch 13 das untere Ende des Verkleidungsbauteil 16 lokalisiert (Anschlag 30). Anschließend wird - wie in der Figur 3 mit dem Pfeil B verdeutlicht ist - in einem zweiten Schritt der Deichselkopf 12 an dem Befestigungsflansch 21 befestigt, wobei der an dem Befestigungsflansch 21 befestigte Deichselkopf 12 das obere Ende des Verkleidungsbauteil 16 lokalisiert (Anschlag 31).

Bei der erfindungsgemäßen Deichsel 7 ist somit der Deichselschaft 10 aus zwei Bauteilen zusammengesetzt, nämlich der metallischen Tragstruktur 15 und dem die metallische Tragstruktur 15 verkleidenden Verkleidungsbauteil 16. Bei der erfindungsgemäßen Deichsel 7 erfolgt somit eine Funktionstrennung dahingehend, dass die metallische Tragstruktur 15 nur die mechanischen Eigenschaften des Deichselschaftes 10 erfüllen muss und das Verkleidungsbauteil 16 nur die optischen Eigenschaften des Deichselschaftes 10 erfüllen muss. Mit der metallischen Tragstruktur 15 können hierbei mit geringem Bauaufwand eine hohe Festigkeit und eine hohe Robustheit des Deichselschaftes 10 erzielt werden. Das Verkleidungsbauteil 16 ermöglicht es bei geringem Bauaufwand, bei den optischen Eigenschaften eine ästhetische Form und Anmutung sowie gegebenenfalls eine komplexe Form des Deichselschaftes 10 umzusetzen.

Der modulare Aufbau des Deichselschaftes 1 ermöglicht es weiterhin, Verbindungskabel von dem Deichselkopf 12 zu dem Flurförderzeug 1 und entsprechende elektrische Steckverbindungen einfach zu montieren, da diese in den zwischen dem Verkleidungsbauteil 16 und dem Metallrohr 17 ausgebildeten Aufnahmekanälen 35, 36 (Figur 5) angeordnet werden können. Zudem kann eine Federeinrichtung, beispielsweise eine Gasfeder, die die Deichsel 7 in eine vertikale Richtung aufrichtet, einfach montiert werden, wenn diese vor dem Aufschieben des Verkleidungsbauteils 16 auf das Metallrohr 17 leicht zugänglich außen an dem Metallrohr 17 befestigt wird und nach dem Aufschieben des Verkleidungsbauteils 16 in einem zwischen dem Verkleidungsbauteil 16 und dem Metallrohr 17 ausgebildeten Aufnahmekanal 35 bzw. 36 angeordnet ist.

Ein weiterer Vorteil der erfindungsgemäßen Deichsel 7 besteht darin, dass der Deichselschaft 10 einen modularen Aufbau aufweist. Der modulare Aufbau des Deichselschaftes 10 ermöglicht es, dass unterschiedliche Versionen von Deichseln 7, die sich hinsichtlich der optischen Eigenschaften des Deichselschaftes 10 unterscheiden, mit einer als Gleichteil ausgebildeten metallischen Tragstruktur 15 und entsprechend angepassten und unterschiedlichen Verkleidungsbauteilen 16, die unterschiedliche optische Eigenschaften, beispielsweise unterschiedliche Form und/oder Farbe aufweisen, hergestellt werden können. Unterschiedliche Versionen von Deichseln 7, die sich hinsichtlich der optischen Eigenschaften des Deichselschaftes 10 unterscheiden, benötigen daher einen deutlich verringerten Entwicklungsaufwand und sind kostengünstig herstellbar.

Zudem ermöglicht es der modulare Aufbau des Deichselschaftes 10, dass unterschiedlich gestaltete Deichselköpfe 12 auf einfache Weise an die Tragstruktur 15 angebaut werden können.

Der erfindungsgemäße Deichselschaft 10 mit dem modularen Aufbau ermöglicht es somit auf einfache Weise, in einem Baukastensystem mit der metallischen Tragstruktur 15 als Gleichteil unterschiedliche Versionen von Deichseln 7 herzustellen, die sich durch Verwendung von unterschiedlichen Verkleidungsbauteilen 16 hinsichtlich der optischen Eigenschaften des Deichselschaftes 10 unterscheiden und/oder durch Verwendung unterschiedlicher Deichselköpfe 12 hinsichtlich des Deichselkopfes 12 unterscheiden.

## Patentansprüche

1. Deichsel (7) für ein Flurförderzeug mit einem Deichselschaft (10), der an einem ersten Ende mit einer Gelenkverbindung (11) an dem Flurförderzeug (1) anbaubar ist und an einem zweiten Ende mit einem Deichselkopf (12) verbunden ist, wobei der Deichselschaft (10) der Deichsel (7) aus einer metallischen Tragstruktur (15), die an einem ersten Ende mit einem Gelenkflansch (13) der Gelenkverbindung (11) versehen ist und an einem zweiten Ende mit einem Befestigungsflansch (21) zur Befestigung des Deichselkopfes (12) versehen ist, gebildet ist, **dadurch gekennzeichnet, dass** der Deichselschaft (10) der Deichsel (7) weiterhin aus einem die metallische Tragstruktur (15) verkleidenden Verkleidungsbauteil (16) gebildet ist, wobei zwischen dem Gelenkflansch (13) und dem Verkleidungsbauteil (16) ein axialer Anschlag (30) ausgebildet ist und wobei zwischen dem mit dem Befestigungsflansch (21) verbundenen Deichselkopf (12) und dem Verkleidungsbauteil (16) ein weiterer axialer Anschlag (31) ausgebildet ist.

2. Deichsel nach Anspruch 1, **dadurch gekennzeichnet, dass** das Verkleidungsbauteil (16) als rohrförmige Hülse (22) ausgebildet ist, die auf die metallische Tragstruktur (15) aufschiebbar ist.

3. Deichsel nach Anspruch 1 oder 2, **dadurch gekennzeichnet, dass** das Verkleidungsbauteil (16) aus Kunststoff besteht.

4. Deichsel nach einem der Ansprüche 1 bis 3, **dadurch gekennzeichnet, dass** die metallische Tragstruktur (15) ein Metallrohr (17) aufweist, an dem an dem ersten Ende der Gelenkflansch (13) und an dem zweiten Ende der Befestigungsflansch (21) befestigt ist.

5. Deichsel nach einem der Ansprüche 1 bis 4, **dadurch gekennzeichnet, dass** der Gelenkflansch (13) als Gelenkgabel ausgebildet ist und/oder der Befestigungsflansch (21) als Flanschplatte ausgebildet ist.

6. Deichsel nach einem der Ansprüche 1 bis 5, **dadurch gekennzeichnet, dass** der Innenquerschnitt des Verkleidungsbauteils (16) größer als die Außenumfangsabmessungen (A1, A2) des Befestigungsflansches (21) ist, so dass das Verkleidungsbauteil (16) in Längsrichtung (LR) der metallischen Tragstruktur (15) über den Befestigungsflansch (21) auf die Tragstruktur (15) aufschiebbar ist.

7. Deichsel nach einem der Ansprüche 4 bis 6, **dadurch gekennzeichnet, dass** das Verkleidungsbauteil (16) mit der Innenfläche (16a) zumindest teilweise an der Außenfläche (17a) des Metallrohrs (17) anliegt.

8. Verfahren zur Herstellung einer Deichsel (7) nach einem der vorangegangenen Ansprüche mit den folgenden Schritten:
• Herstellung einer metallischen Tragstruktur (15);
• Bereitstellen eines Verkleidungsbauteils (16);
• Aufschieben des Verkleidungsbauteils (16) auf die Tragstruktur (15);
• Befestigung eines Deichselkopfes (12) an der Tragstruktur (15).

9. Baukastensystem für zumindest zwei unterschiedliche Deichseln (7) nach einem der Ansprüche 1 bis 7, **dadurch gekennzeichnet, dass** die metallische Tragstruktur (15) als Gleichteil ausgebildet ist und das Baukastensystem zumindest zwei unterschiedliche Verkleidungsbauteile (16) umfasst, die sich hinsichtlich der optischen Eigenschaften unterscheiden.

10. Baukastensystem nach Anspruch 9, **dadurch gekennzeichnet, dass** das Baukastensystem zumindest zwei unterschiedliche Deichselköpfe (12) umfasst.

## Claims

1. Drawbar (7) for an industrial truck with a drawbar shaft (10) which can be attached at a first end by way of an articulated connection (11) to the industrial truck (1) and is connected at a second end to a drawbar head (12), wherein the drawbar shaft (10) of the drawbar (7) is formed from a metallic supporting structure (15) which is provided at a first end with a joint flange (13) of the articulated connection (11) and is provided at a second end with a fastening flange (21) for fastening the drawbar head (12), **characterized in that**, furthermore, the drawbar shaft (10) of the drawbar (7) is formed from a trim component (16) which covers the metallic supporting structure (15), wherein an axial stop (30) is configured between the joint flange (13) and the trim component (16), and wherein a further axial stop (31) is configured between the trim component (16) and the drawbar head (12) which is connected to the fastening flange (21).

2. Drawbar according to Claim 1, **characterized in that** the trim component (16) is configured as a tubular sleeve (22) which can be pushed onto the metallic supporting structure (15).

3. Drawbar according to Claim 1 or 2, **characterized in that** the trim component (16) consists of plastic.

4. Drawbar according to one of Claims 1 to 3, **characterized in that** the metallic supporting structure (15) has a metal tube (17), to which the joint flange (13) is fastened at the first end and a fastening flange (21) is fastened at the second end.

5. Drawbar according to one of Claims 1 to 4, **characterized in that** the joint flange (13) is configured as a joint fork, and/or the fastening flange (21) is configured as a flange plate.

6. Drawbar according to one of Claims 1 to 5, **characterized in that** the internal cross section of the trim component (16) is greater than the external peripheral dimensions (A1, A2) of the fastening flange (21), with the result that the trim component (16) can be pushed onto the supporting structure (15) over the fastening flange (21) in the longitudinal direction (LR) of the metallic supporting structure (15).

7. Drawbar according to one of Claims 4 to 6, **characterized in that** the trim component (16) bears with the inner face (16a) at least partially against the outer face (17a) of the metal tube (17).

8. Method for producing a drawbar (7) according to one of the preceding claims with the following steps:
• producing of a metallic supporting structure (15);
• providing of a trim component (16);
• pushing of the trim component (16) onto the supporting structure (15);
• fastening of a drawbar head (12) to the supporting structure (15).

9. Kit system for at least two different drawbars (7) according to one of Claims 1 to 7, **characterized in that** the metallic supporting structure (15) is configured as an identical part, and the kit system comprises at least two different trim components (16) which differ from one another with regard to the visual characteristics.

10. Kit system according to Claim 9, **characterized in that** the kit system comprises at least two different drawbar heads (12).

## Revendications

1. Timon (7) pour un chariot de manutention, comprenant une tige de timon (10) qui, à une première extrémité, peut être montée sur le chariot de manutention (1) avec une liaison articulée (11) et qui, à une deuxième extrémité, est reliée à une tête de timon (12), la tige de timon (10) du timon (7) étant formée d'une structure porteuse métallique (15) qui est munie à une première extrémité d'une bride d'articulation (13) de la liaison articulée (11) et qui est munie à une deuxième extrémité d'une bride de fixation (21) pour la fixation de la tête de timon (12), **caractérisé en ce que** la tige de timon (10) du timon (7) est en outre formée d'un composant d'habillage (16) habillant la structure porteuse métallique (15), une butée axiale (30) étant réalisée entre la bride d'articulation (13) et le composant d'habillage (16), et une autre butée axiale (31) étant réalisée entre la tête de timon (12) reliée à la bride de fixation (21) et le composant d'habillage (16).

2. Timon selon la revendication 1, **caractérisé en ce que** le composant d'habillage (16) est réalisé sous forme de manchon tubulaire (22) qui peut être enfilé sur la structure porteuse métallique (15).

3. Timon selon la revendication 1 ou 2, **caractérisé en ce que** le composant d'habillage (16) est constitué de matière plastique.

4. Timon selon l'une quelconque des revendications 1 à 3, **caractérisé en ce que** la structure porteuse métallique (15) présente un tube métallique (17) auquel sont fixées, à la première extrémité, la bride d'articulation (13) et, à la deuxième extrémité, la bride de fixation (21).

5. Timon selon l'une quelconque des revendications 1 à 4, **caractérisé en ce que** la bride d'articulation (13) est réalisée sous forme de fourche d'articulation et/ou la bride de fixation (21) est réalisée sous forme de plaque à bride.

6. Timon selon l'une quelconque des revendications 1 à 5, **caractérisé en ce que** la section transversale intérieure du composant d'habillage (16) est supérieure aux dimensions périphériques extérieures (A1, A2) de la bride de fixation (21), de telle sorte que le composant d'habillage (16) peut être enfilé sur la structure porteuse (15) dans la direction longitudinale (LR) de la structure porteuse métallique (15) au-dessus de la bride de fixation (21).

7. Timon selon l'une quelconque des revendications 4 à 6, **caractérisé en ce que** le composant d'habillage (16) s'appuie par sa surface intérieure (16a) au moins partiellement sur la surface extérieure (17a) du tube métallique (17).

8. Procédé de fabrication d'un timon (7) selon l'une quelconque des revendications précédentes, comprenant les étapes suivantes :
- la fabrication d'une structure porteuse métallique (15) ;
- la fourniture d'un composant d'habillage (16) ;
- l'enfilage du composant d'habillage (16) sur la structure porteuse (15) ;
- la fixation d'une tête de timon (12) sur la structure porteuse (15).

9. Système modulaire pour au moins deux timons (7) différents selon l'une quelconque des revendications 1 à 7, **caractérisé en ce que** la structure porteuse métallique (15) est réalisée sous forme de pièce identique et le système modulaire comprend au moins deux composants d'habillage (16) différents qui se distinguent au regard des propriétés optiques.

10. Système modulaire selon la revendication 9, **caractérisé en ce que** le système modulaire comprend au moins deux têtes de timon (12) différentes.
